Europäisches Patentamt

European Patent Office

Office européen des brevets

(11) Publication number: **0 241 083**
**A1**

(12) **EUROPEAN PATENT APPLICATION**

(21) Application number: **87200587.1**

(22) Date of filing: **30.03.87**

(51) Int. Cl.⁴: **C01F 17/00 , C25B 1/00 , C25C 3/12 , G01N 27/12**

(30) Priority: **02.04.86 EP 86810157**

(43) Date of publication of application:
**14.10.87 Bulletin 87/42**

(84) Designated Contracting States:
**AT BE CH DE ES FR GB GR IT LI LU NL SE**

(71) Applicant: **ELTECH SYSTEMS CORPORATION Corporate Headquaters 6100 Glades Road/Suite 305 Boca Raton Florida 33434(US)**

(72) Inventor: **Duruz, Jean-Jaques 4, rue de Hesse CH-1204 Geneva(CH)**

(74) Representative: **Cronin, Brian Harold John et al c/o DST SA 9, Route de Troinex CH-1227 Carouge/GE(CH)**

(54) Method of producing a coating or a self-sustaining body of cerium-oxyfluoride.

(57) A coating or a self-sustaining body of cerium oxyfluoride of the formula $CeO_xF_y$ , where the ranges for x and y are x = 1.8-1.99 and y = 0.001-0.2 is produced by a novel method. This novel method comprises the steps of producing a starting material comprising grains of a desired end composition of $CeO_xF_y$ within the given range of x and y, comminuting the starting material to a particulate, and consolidating the particulate starting material into a shape or onto a substrate. The initial production of the starting material is carried out by electrodeposition of the cerium-oxyfluoride in a fused-salt bath such as in an aluminum electrowinning cell, followed by stripping of the deposit from the anode substrate and reconsolidation, or by direct sintering, comminuting of the sintered body and reconsolidation.

# METHOD OF PRODUCING A COATING OR A SELF-SUSTAINING BODY OF CERIUM-OXYFLUORIDE

## Field of Invention

The invention relates to a method of producing a coating or a self-sustaining body comprising cerium-oxyfluoride of the formula $CeO_xF_y$, where the ranges for x and y are x = 1.5-1.99 and y = 0.01-0.5. The invention further relates to the use of a coating or self-sustaining body produced according to the above method.

## Background Art

EP-A-0 114 085 discloses a method of producing a coating of cerium-oxyfluoride by electrodeposition in molten cryolite containing Ce ions introduced in the form of $CeF_3$. Electrolysis carried out under normal operating conditions of an aluminum production cell produced a coating comprising cerium-oxyfluoride.

The deposition speed, the obtainable thickness of the coating and in particular the structure of the coating may vary depending on the bath composition and other operation parameters. For the use of the coating as inert protective coating of an aluminum cell anode as described in the above publication, the conditions found in some commercial baths are not optimum, or even inhibiting for the proper formation of the coating. Thus, in baths containing relatively high amounts (e.g. 7% and more) of $CaF_3$ the formation of the coating is practically suppressed. Other unfavourable conditions lead to the formation of porous structures or cracks.

Other methods to produce the above mentioned $CeO_xF_y$ coating on a substrate were proposed which do not require the coating to be applied in-situ during operation of an aluminum electrowinning anode. These include plasma or flame spraying, vapour deposition, sputtering, chemideposition or painting of the coating material to produce an electronically-conductive and anodically active coating consisting predominantly of cerium oxyfluoride. However, these processes are either very expensive, specially for rather large articles such as aluminum electrowinning anodes (such as in the case of plasma or flame spraying, vapour deposition, sputtering or chemideposition) or the quality of the microstructure of the coating is not sufficient for the intended use in molten cryolite.

It is therefore desirable to provide a method of producing such coatings which is to a high degree independent of operating conditions of the aluminum electrowinning cells wherein the coated anodes are to be used. Moreover, the production cost of the coating should not offset the advantages and savings obtainable by the use of inert anodes in aluminum production. Additionally the method should provide the desired microstructure.

It is also possible to produce cerium oxyfluoride by direct reaction-sintering of $CeO_2$ and $CeF_3$ as described by J.-P. Besse and M. Capestan in "BULLETIN DE LA SOCIETE CHIMIQUE DE FRANCE", 1968, No. 8, pages 3096-98. According to this publication the authors heated a pulverulent mixture of $Ce_2O_3$ or $CeO_2$ and $CeF_3$ at 1150°C for 8 hours. The object of these experiments was to carry out X-Ray investigations of the obtained crystallographic patterns of this system.

Another experiment was carried out by J. Pannetier and J. Lucas, reported in "C.R. ACAD. SC. PARIS" t. 268 (17.Feb. 1969). Among others, the system $CeOF-CeO_2$ was investigated over the entire range indicating a small range of solubility of CeOF in $CeO_{1.1}F_{0.9}$.

However, neither of the above two experimental reports indicate the formation of a material according to the formula $CeO_xF_y$, where x = 1.5-1.99 and y = 0.01-0.5. Even though the range of this formula may be included within the range of the system $CeOF - CeO_2$, there is no specific mention of a composition within the specific range now given.

## Objects of the Invention

It is an object of the present invention to provide a method of producing either a coating on a substrate or a self-sustaining body comprising cerium-oxyfluoride of the above mentioned formula, which method provides a microstruture of the cerium-oxyfluoride coating which makes the coating substantially impermeable for fused salts such as molten cryolite to render it useful as inert coating for aluminum electrowinning anodes.

It is another object of the invention to provide a method of producing a coating comprising cerium-oxyfluoride of the above mentioned formula from a starting material produced under conditions which are independent of conditions met in in-situ production such as in aluminum production cells.

It is a further object of the invention to provide a method of producing a coating or a self-sustaining body comprising cerium-oxyfluoride of the above mentioned formula whereby bodies of any desired shape and coatings of any desired thickness may be produced.

## Summary of Invention

The above and other objects are met by firstly producing a starting material comprising a desired end composition of $CeO_xF_y$ within said range of x and y in particulate condition and then consolidating the particulate starting material into a coating on a substrate or into a self-sustaining body. In most preferred embodiments, the values of x and y will be in the narrower ranges x = 1.85-1.95 and y = 0.05-0.15. Further aspects are set out in the dependent claims.

## Detailed Description of Invention

The production of the starting material may be carried out by any suitable process yielding a material of the desired chemical composition. This material may be produced in bulk or as a coating and subsequently stripped off from its substrate and brought into particulate condition or it may already be prepared as a particulate. The particulate is then re-consolidated either to a self-sustaining body or on a substrate to constitute a coating thereon. In the case where the starting material is prepared as a more or less compact body and ground to a powder to be re-compacted again, the main object of the comminuting and re-consolidating operation is to provide a material of given structure. In the case where the originally formed material may have an irregular, porous structure which may not be usable for a given application, the method according to the present invention provides the possibility of adjusting the porous character of the coating or the body in question. Grinding the starting material to a powder and pressing or sintering for consolidation may, in this case, provide a material with the desired higher density. The pulverulent starting material may also be provided with additives in this stage which influence certain properties of the final coating such as oxides, fluorides or oxyfluorides of other metals especially rare-earth metals e.g. praseodymium. Such additives may serve as consolidation aids or sintering aids or may improve the electrical (ie. electronic and/or ionic) conductivity of the cerium oxyfluoride.

The initial production step for the starting material may comprise electrodeposition of the cerium-oxyfluoride in a fused-salt bath of suitable composition or direct reaction-sintering of a particulate precursor mixture. In the first case, the cerium-oxyfluoride is initially formed as a coating which needs to be stripped off from its substrate. Depending on the adhesion of the coating on the substrate the stripping operation may already imply a pulverization of the coating material or produce chips or bigger pieces which must be comminuted e.g. by a grinding process. Other comminuting processes, however, are possible.

Another production method for the starting material comprises precipitation of a particulate cerium oxyfluoride in a fused salt fluoride bath containing one or more of $CeO_2$, $Ce_2O_3$, $Ce(CO_3)_2$ and $CeF_3$ by introducing oxygen into said bath and filtering the particulate precipitate. This method already provides a particulate starting material which may be used directly for consolidation into the desired shape or be further ground prior to the compacting operation.

According to a further method of preparing the starting material a particulate precursor mixture of $CeO_2$ and/or $Ce_2O_3$ and $CeF_3$ or $NH_4F$ is prepared in the appropriate stoichiometric composition to yield the desired end composition within the considered range of the cerium-oxyfluoride. The reaction-sintering process may be carried out according to known procedures, whereby a generally high density end product is obtained. However, should it be desirable to obtain a porous end structure, volatile additives may be given to the starting material or the chemical composition of the starting material may be such that volatile reaction products are produced which evolve during the reaction-sintering process. The above mentioned $NH_4F$ is an example for such a volatile component acting at the same time as fluorine source.

Initial pressing of the particulate starting material into its desired shape may eliminate later machining of the final body.

It is understood that other alternative methods of producing the starting material may be used without departing from the scope of the present invention.

The coating according to the invention may be used as a protective, inert coating for aluminum production anodes in alumina electrolysis cells, whereby the improved structure, in particular the density leads to a reduction of substrate corrosion which may occasionally occur at anode coatings according to the above mentioned EP-A-0114085. The method according to the invention allows the production of anode coatings for commercial alumina electrolysis baths with high $CaF_3$ contents where in-situ electroplating is not feasible.

A coating made by the above method, intended for use in an aluminum production cell may constitute an underlayer upon which further cerium oxyfluoride is deposited as described in the above mentioned EP-A-0 II4 085. It was found that only the initial formation of the cerium oxycompound coating on tin oxide substrates is inhibited in molten cryolite with a too high $CaF_3$ concentration. Once an initial underlayer is formed by the above method, the maintenance of the coating or the increase of its thickness may be carried out even in electrolytes which do not permit the initial formation of the coating.

Alternatively, anodes for aluminum production may be coated with cerium oxyfluoride according to the present invention and used in an electrolysis cell until the thickness or the general condition of the coating requires the anode to be recoated, thus the use of the coated anode does not require the maintenance of a certain Ce concentration in the bath.

The production of an anode coating according to the present invention comprises several advantages over in-situ production. The chemical composition of the coating, i.e. the exact values of x and y in the formula $CeO_xF_y$ may be adjusted by proper preparation conditions which are independent from those found in aluminum production cells. The chemical composition of the coating may thus be better optimized in respect to its resistivity to molten cryolite or other cell contents. Another advantage is that the microstructure and density of the coating may be improved by known means which may not be applicable inside an aluminum production cell, such as pressing or sintering operations. When pre-coated anodes are used in an aluminum production cell, the concentration of Ce in the melt may be kept much lower than in the case where the coating must entirely be formed by contents of the bath.

Another use for the cerium-oxyfluoride material produced according to the present invention is for chemical gas sensors. Cerium-oxyfluoride provides ionic as well as electronic conductivity and may therefore be employed for applications which require materials that allow the migration of ions within the structure.

Other applications are envisaged for the coating or the body according to the present invention which make use of the unique chemical and physical properties of cerium-oxyfluoride within the given range. Some of these unique properties are the corrosion resistance to oxidizing as well as reducing environments, the electronic and ionic conductivity, and resistance to molten aluminum and cryolite.

## EXAMPLES

The invention is described in more detail in the following by way of several examples.

## Example I

In a laboratory size alumina electrolysis cell a bath comprising 90% cryolite (KE Groenland) and I0% alumina was prepared with an addition of 2.7 weight % $CeO_2$ (98 Rhone Poulenc). The actual weight of the bath constituents used in this example was 8.76 kg cryolite, 973 g $Al_2O_3$ and 270 g $CeO_2$. The nominal weight of the bath was I0 kg. The bath ratio (weight ratio of NaF : $AlF_3$) at the beginning of electrolysis was I.5I and at the end I.20.

The cell comprised a graphite crucible having a bottom plate and a cylindrical side wall of I40mm diameter and I80 mm height, arranged within an alumina crucible. The anode consisted of a cylinder of $SnO_2$ the lower end of which was hemi-spherical. The diameter of the anode was 50 mm and its length 64 mm. The active area was I00 cm².

Electrolysis was carried out under a total current of 40 A, yielding an anodic current density of 0.4 A/cm² The anode potential was 3.5 V and the cathode potential 2.7 V providing to a total cell voltage of 6.2 V. The operating temperature was 990°C. After a specific charge of 7.96 A.h/cm² (or 796 A.h total) corresponding to a duration of approximately 20 hours a light-blue coating of cerium-oxyfluoride of the composition $CeO_{1.9}F_{0.1}$ of I.5 to 3.0 mm thickness was deposited on the anode surface. The surface of the coating was relatively rough and had a porous structure. Typically, the Sn concentration in the bath was less than 5000 ppm.

The coating thus obtained has an estimated density of approximately 60% of its theoretical density. It was scratched off from the $SnO_2$ substrate manually using a steel tool and collected in a recipient. The particles were milled to a powder having a grain size of less than I00 micrometers. The cerium-oxyfluoride powder was then compacted to a pellet in a uniderectional pressing operation applying a pressure of I000 kg per cm². The pellet was removed from the press and heated in a pressureless furnace with the following heating profile: 20-200°C in I0 hours, 200-500°C in 4 hours, 500-I420°C in 8.5 hours, maintained for 8 hours at I420°C, and cooled from I420-500°C in I6 hours and from 500-20°C in 8 hours. The density of the sintered pellet was estimated to be higher than 95% of its theoretical density.

The experiment as described above proved that the density of a porous cerium-oxyfluoride coating may be significantly increased by removing it from the initial electrodeposition anode, comminuting and sintering the obtained powder. Sintering of the powder onto a fresh anode substrate should therefore yield an anode having a cerium-oxyfluoride coating of high density, thus considerably improving its performance as aluminum electrowinning anode in a cryolite bath with respect to its impermeability and protective characteristics for the substrate yielding a significant decrease of the Sn contamination in the aluminum electrowon.

Example 2

A pellet of cerium-oxyfluoride was prepared as described in Example I up to the unidirectional pressing operation. The pellet was thus not sintered. This pellet was investigated for its properties as a gas sensor. It was found that I% CO in air changes the electrical conductivity of the material at 4I5°C by I8% and I% $CH_4$ under the same conditions by less than I%. The material has thus at this temperature a $CO/CH_4$ selectivity of 20:I or better.

The $CO/CH_4$ sensitivity of a commercial $SnO_2$ sensor (Figaro® No. 77I) is in the order of 40:I, but the material as described above has still another advantage, ie. the low sensitivity to vapour. Saturated air at 20°C yields only a I% change of conductivity of the material described above compared to 20% of the mentioned $SnO_2$ sensor.

Claims

I. A method of producing a coating or a self-sustaining body comprising cerium-oxyfluoride of the formula $CeO_xF_y$, where the ranges for x and y are x = I.5-I.99 and y = 0.0I-0.5, comprising the steps of:

-preparing a starting material having a desired composition of $CeO_xF_y$ within said range of x and y in particulate condition; and

-consolidating said particulate starting material into a shape or onto a substrate.

2. The method of claim I, wherein the starting material is prepared in compact condition, comminuted and re-consolidated.

3. The method of claim 2, wherein the starting material is prepared by electrodepositing cerium-oxyfluoride onto an anode substrate by electrolysis in a fused-salt bath, stripped from said substrate, comminuted into a particulate and re-consolidated.

4. The method of claim 3, wherein the electrolysis is carried out in a bath of molten cryolite comprising additions of one or more of $CeO_2$, $Ce_2O_3$, $Ce(CO_3)_2$ and $CeF_3$.

5. The method of claim I, wherein the starting material is prepared by precipitating particulate cerium oxyfluoride from a fused salt fluoride bath containing one or more of $CeO_2$, $Ce_2O_3$, $Ce(CO_3)_2$ and $CeF_3$ by introducing oxygen into said bath and filtering the particulate precipitate.

6. The method of claim I, wherein the production of the starting material is carried out by direct reaction sintering of a precursor mixture.

7. The method of claim 6, wherein the precursor mixture comprises pulverulent $CeF_3$ or $NH_4F$ and at least one of $CeO_2$, $Ce(CO_3)_2$ and $Ce_2O_3$ in a molar ratio suitable to yield the desired composition.

8. The method of any one of the preceding claims, wherein oxides, fluorides or oxyfluorides of other metals are added to the particulate starting material.

9. The method of any one of the preceding claims, wherein consolidation aids are added to the starting material.

I0. Use of a coating produced according to one of the preceding claims as protective, inert coating for aluminum electrowinning anodes.

II. Use of a coating or body produced according to one of claims I-9 as chemical gas sensor.

I2. Use of a coating produced according to one of claims I-9 as corrosion protection for a substrate.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,D | COMPTE RENDU D L'ACADEMIE DES SCIENCES PARIS, part 268, serie C, 17th February 1969, pages 604-607, Paris, FR; J. PANNETIER et al.: "Contribution à l'étude des oxyfluorures de cérium" | | C 01 F  17/00<br>C 25 B  1/00<br>C 25 C  3/12<br>G 01 N  27/12 |
| A,D | BULLETIN DE LA SOCIETE CHIMIQUE DE FRANCE, no. 8, 1968, pages 3096-3098; J.-P. BESSE et al.: "Etude des systèmes $CeF3-CeO2$, $CeF3-Ce2O3$ et $CeF3-CeO2-Ce2O3$" | | |
| A,D | EP-A-0 114 085  (ELTECH SYSTEMS CORP.) | | |
| A | US-A-3 341 437  (L.R. WOOD) | | TECHNICAL FIELDS SEARCHED (Int. Cl.4) |
| A | GB-A-1 149 319  (PRODUITS CHIMIQUES PECHINEY-SAINT-GOBAIN) | | C 01 F<br>C 25 C |
| A | LU-A-  39 773  (MOLYBDENUM CORP. OF AMERICA) | | |

The present search report has been drawn up for all claims

| Place of search | Date of completion of the search | Examiner |
|---|---|---|
| THE HAGUE | 30-06-1987 | LIBBERECHT-VERBEECK |